**Europäisches Patentamt**

**European Patent Office**

**Office européen des brevets**

(19)

(11) Veröffentlichungsnummer: **0 216 224**
**B1**

(12)

# EUROPÄISCHE PATENTSCHRIFT

(45) Veröffentlichungstag der Patentschrift:
07.06.89

(51) Int. Cl.⁴: **H02M 1/08**

(21) Anmeldenummer: **86112273.7**

(22) Anmeldetag: **04.09.86**

(54) **Schaltungsanordnung zur netzfrequenzunabhängigen Leistungsstellung und zur Kompensation von Parameterstreuungen bei der Phasenanschnittsteuerung.**

(30) Priorität: **25.09.85 DE 3534066**

(43) Veröffentlichungstag der Anmeldung:
**01.04.87 Patentblatt 87/14**

(45) Bekanntmachung des Hinweises auf die Patenterteilung:
**07.06.89 Patentblatt 89/23**

(84) Benannte Vertragsstaaten:
**FR GB IT**

(56) Entgegenhaltungen:
**DE-A- 2 850 453**

**IEEE TRANSACTIONS ON INDUSTRIAL ELECTRONICS AND CONTROL INSTRUMENTATION, Band IECI-24, Nr. 1, Februar 1977, Seiten 46-49, New York, US; S. MURUGESAN et al.: "Simple adaptive analog and digital trigger circuits for thyristors working under wide range of supply frequencies" 000**

(73) Patentinhaber: **TELEFUNKEN electronic GmbH, Theresienstrasse 2, D-7100 Heilbronn(DE)**

(72) Erfinder: **Nutz, Karl-Diether, Blumenstrasse 33, D-7101 Oedheim(DE)**

(74) Vertreter: **Maute, Hans-Jürgen, Dipl.-Ing., TELEFUNKEN electronic GmbH Theresienstrasse 2, D-7100 Heilbronn(DE)**

## Beschreibung

Die Erfindung betrifft eine Schaltungsanordnung zur netzfrequenzunabhängigen Leistungsstellung und zur Kompensation von Parameterstreuungen bei der Phasenanschnittsteuerung mit einer Zündimpulsformereinheit, in der durch Vergleichsbildung einer Steuer- oder Regelspannung mit einer periodischen Vergleichsspannung ein Zündimpuls für einen Phasenanschnittwinkel erzeugt wird. Eine derartige Schaltungsanordnung ist beispielsweise aus der DE-A 2 850 453 bekannt. Auch aus IEEE Transactions on Industrial Electronics and Control Instrumentation, Band IECI-24, Nr. 1, Febr. 77, Seiten 46–49, US, S. Murugesan et. al. sind Schaltungen bekannt, mit denen bei Phasenanschnittsteuerungen Sägezahnspannungen erzeugt werden, die am Ende einer Netzperiode einen definierten Wert erreichen.

Bei Schaltungsanordnungen für die Phasenanschnittsteuerung ergeben sich aufgrund von Bauelementtoleranzen Streuungen für den Phasenanschnittwinkel $\alpha$ bei vorgegebenen Steuerspannungen.

Außerdem ist die Leistungsstellung dabei nicht unabhängig von der Netzfrequenz.

Um beispielsweise die Streuungen von Bauelementen wie Kapazitäten oder Widerständen zu kompensieren, sind Abgleichvorgänge und Justagen notwendig. Betreibt man beispielsweise eine Schaltungsanordnung zur Phasenanschnittsteuerung statt an einer Netzspannung mit 50 Hz an einem Netz mit einer anderen Frequenz, ist die vorgegebene, eingestellte Leistungsübertragung nicht mehr die gleiche. Bei linear verlaufenden periodischen Vergleichsspannungen wird deshalb durch Variation von Widerständen oder Kapazitäten der Verlauf der periodischen Vergleichsspannung auf die aktuelle Netzfrequenz so eingestellt, daß der einmal gewählte Stellbereich vollständig erhalten bleibt.

Deshalb liegt der vorliegenden Erfindung die Aufgabe zugrunde, eine Schaltungsanordnung für eine Phasenanschnittsteuerung anzugeben, die keine Abgleichvorgänge erforderlich macht und die an Netzspannungen mit verschiedenen Frequenzen betrieben werden kann, ohne daß dabei der Stellbereich geändert werden muß.

Diese Aufgabe wird erfindungsgemäß dadurch gelöst, daß die periodische Vergleichsspannung über von einer Logikeinheit gesteuerten Stromquellen im eingeregelten Zustand in ihrem zeitlichen Verlauf so beeinflußt wird, daß bei jedem Nulldurchgang der Netzspannung ein festes, vorgegebenes Referenzspannungspotential erreicht, wobei die gesteuerten Stromquellen über einen Digital-Analog-Wandler von einem Vorwärts-Rückwärts-Zähler als Bestandteil der Logikeinheit angesteuert werden, der aus dem Nulldurchgang der Netzfrequenz abgeleitete Signale unterschiedlicher Impulsdauer zugeführt sind, durch die der Zählmodus der Vorwärts-Rückwärts-Zählers in Abhängigkeit von der jeweiligen Lage des Schnittpunktes der periodischen Vergleichsspannung mit einer Referenzspannung gesteuert wird.

Weitere vorteilhafte Ausgestaltungen der Erfindung ergeben sich aus den Unteransprüchen.

Die erfindungsgemäße Schaltungsanordnung hat den wesentlichen Vorteil, daß beispielsweise bei Betreiben eines Verbrauchers an einem Mehr-Phasennetz mit beispielsweise drei Phasen keine Selektion von Schaltkreisen, die monolithisch integriert sind, erfolgen muß.

Ein Ausführungsbeispiel der Erfindung ist in den Figuren dargestellt und soll im folgenden näher beschrieben werden:

Es zeigen:

Figur 1: Ein Blockschaltbild zur netzfrequenzunabhängigen Leistungsstellung und Kompensation von Parameterstreuungen bei der Phasenanschnittsteuerung.

Figur 2: Impulsdiagramme und Signalverlauf der periodischen Vergleichsspannung $U_V$.

Figur 3: Die Leistungskennlinie $P(\alpha)$ für die Phasenanschnittsteuerung bei ohmschen Verbraucher.

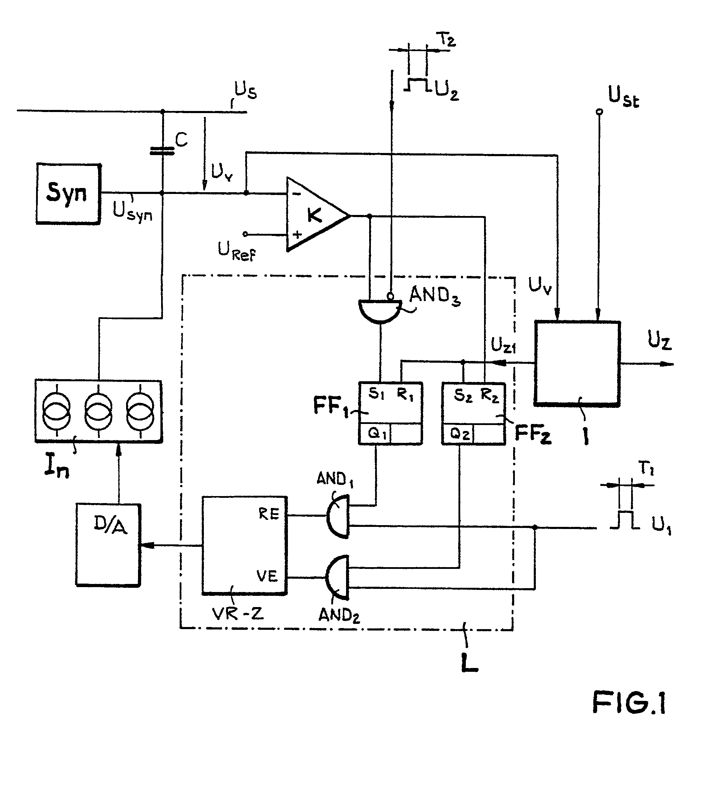

Das in Figur 1 gezeigte Blockschaltbild zeigt eine Kapazität C, deren einer Anschluß mit der konstanten Versorgungsspannung $U_S$ und deren anderer Anschluß mit dem Ausgang der Synchronisiereinrichtung Syn, dem negativen Eingang der Komparatorstufe K, dem Ausgang der gesteuerten Stromquellen $I_n$ und der Zündimpulsformereinheit 1 verbunden ist.

Der positive Eingang der Komparatorstufe K ist mit der Referenzspannung $U_{Ref}$, die auf Nullspannungspotential liegt, verbunden, und der Ausgang der Komparatorstufe K ist einem Eingang des AND-Gatters $AND_3$ und dem Reset-Eingang $R_2$ der zweiten bistabilen Kippstufe $FF_2$ zugeführt. Dem negierenden Eingang des AND-Gatters $AND_3$ ist das aus dem Nulldurchgang der Netzfrequenz $f_0$ abgeleitete zweite Signal $U_2$ mit der Impulsdauer $T_2$ zugeführt, und der Ausgang dieses AND-Gatters ist mit dem Set-Eingang $S_1$ der ersten bistabilen Kippstufe $FF_1$ verbunden.

Der Zündimpulsformereinheit 1 ist die Steuerspannung $U_{St}$ zugeführt, die den für einen Phasenanschnittwinkel $\alpha$ benötigen Zündimpuls $U_Z$ sowie ein davon abgeleitetes Signal $U_{Z1}$ abgibt, welches dem Rest-Eingang $R_1$ der ersten und dem Set-Eingang $S_2$ der zweiten bistabilen Kippstufe $FF_1$ bzw. $FF_2$ zugeführt ist.

Die Ausgänge $Q_1$ bzw. $Q_2$ von erster bzw. zweiter bistabiler Kippstufe $FF_1$ bzw. $FF_2$ sind einem Eingang eines zugeordneten AND-Gatters $AND_1$ bzw. $AND_2$ zugeführt, deren anderer Eingang jeweils von dem aus dem Nulldurchgang der Netzfrequenz $f_0$ abgeleiteten ersten Signal $U_1$ mit der Impulsbreite $T_1$ angesteuert wird.

Der Ausgang des ersten AND-Gatters $AND_1$ bzw. der Ausgang des zweiten AND-Gatters $AND_2$ ist dem Rückwärtseingang RE bzw. dem Vorwärtseingang VE des Vorwärts-Rückwärts Zählers VR-Z zugeführt, dessen Ausgang mit dem Digital-Analog Wandler D/A verbunden ist, der die Stromquel-

len $I_n$ ansteuert.

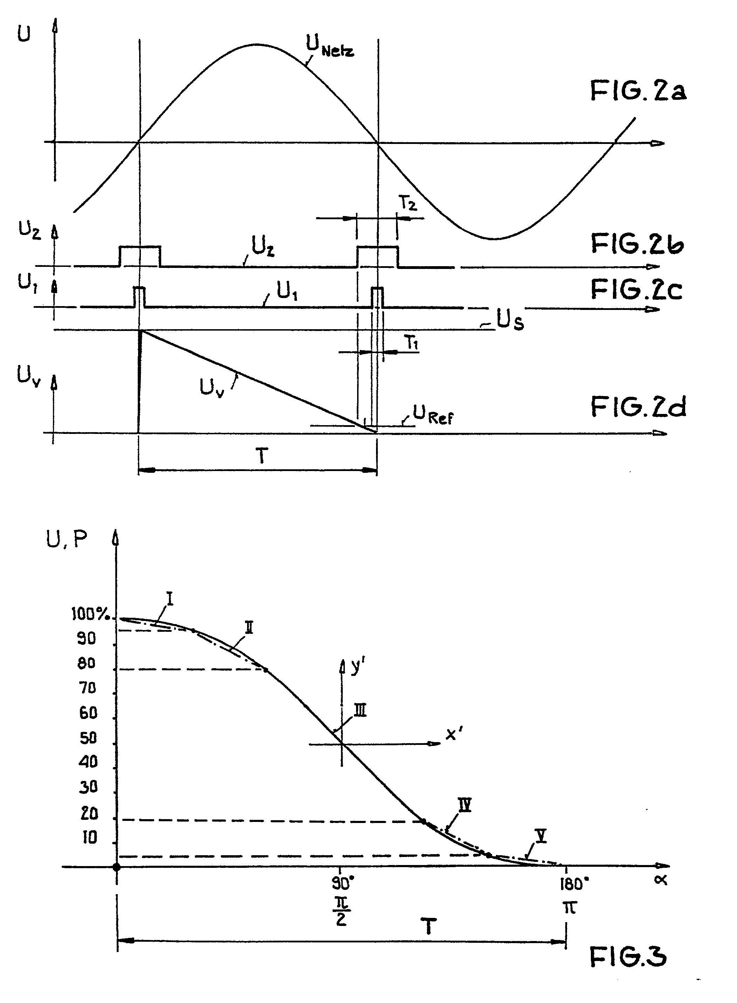

Das Funktionsprinzip des in Figur 1 gezeigten Blockschaltbildes soll anhand der Figur 2 erläutert werden:

Mit jedem Nulldurchgang der Netzwechselspannung $U_N$ in Figur 2a werden die beiden zum Nulldurchgang symmetrischen Signale $U_1$ bzw. $U_2$ gemäß Figur 2c bzw. 2b gebildet. Dabei weist das Signal $U_2$ die Impulsdauer $T_2$ auf, die signifikant länger als die Impulsdauer $T_1$ des Signals $U_1$ ist.

Die Kapazität C ist am Ende jeder Periode T (d.h. beim Nulldurchgang der Netzspannung) auf das Niveau der konstanten Versorgungsspannung $U_S$ geladen und wird über den Zeitraum der Periodendauer T mittels der gesteuerten Stromquellen $I_n$ entladen, gemäß Figur 2d.

Dabei wird die Spannung $U_V$ der Kapazität C an der Komparatorstufe K mit der Referenzspannung $U_{Ref}$, verglichen, und der Ausgang der Komparatorstufe K nimmt dann einen logischen High-Pegel an, wenn das Signal $U_V$ kleiner als die Referenzspannung $U_{Ref}$ geworden ist.

Mit dem Signal $U_2$ erfolgt im AND-Gatter $AND_3$ eine logische Verknüpfung dergestalt, daß der Ausgang des AND-Gatters $AND_3$ dann einen logischen High-Pegel annimmt, wenn das Signal $U_V$ zeitlich vor der Low-High Flanke des Signals $U_2$ den Spannungspegel von $U_{Ref}$ unterschritten hat. Dann wird die erste bistabile Kippstufe $FF_1$ gesetzt und deren Ausgangssignal wird mit dem Signal $U_1$ im AND-Gatter $AND_1$ verknüpft und über den Rückwärtszähler Eingang RE des Vorwärts-Rückwärts Zählers VR-Z wird dessen Zählerstand um einen Schritt zurückgesetzt. Der Digital-Analog Wandler wandelt diesen Zählerstand in eine entsprechende analoge Größe, mit der die gesteuerten Stromquellen $I_n$ so angesteuert werden, daß der Entladevorgang an der Kapazität C langsamer vor sich geht, d.h. daß der zeitliche Verlauf der Spannung $U_V$ flacher wird.

Für den Fall, daß die Spannung $U_V$ die Referenzspannung vor der Low-High-Flanke des Signals $U_1$ nicht unterschreitet, wirkt sich der damit verbundene Low-Pegel der Komparatorstufe K folgendermaßen aus:

Mit jedem aus dem Zündimpuls $U_Z$ angeleiteten Signal $U_{Z1}$ wird die zweite bistabile Kippstufe $FF_2$ über den Set-Eingang $S_2$ gesetzt. Dabei kann das Signal $U_{Z1}$ eine beliebige Phasenlage zwischen 0 und 180° haben, mit Ausnahme des Bereichs um den Nulldurchgang der Netzfrequenz $f_0$, der durch die Impulsdauer $T_1$ des Signals $U_1$ gegeben ist.

Der Ausgang $Q_2$ der zweiten bistabilen Kippstufe $FF_2$ bleibt durch das Signal $U_{Z1}$ gesetzt und zum Zeitpunkt des Auftretens der Impulsdauer $T_1$ des Signals $U_1$ schaltet das zweite AND-Gatter $AND_2$ durch auf den Vorwärts-Eingang des Vorwärts-Rückwärts Zählers VR-Z, dessen Zählerstand um einen Schritt erhöht wird. Der Digital-Analog Wandler setzt diesen Zählerstand in eine analoge Größe um, mit der die gesteuerten Stromquellen so angesteuert werden, daß der Entladevorgang der Kapazität C schneller vor sich geht, d.h. daß der zeitliche Verlauf der Spannung in Figur 2d steiler wird.

Wenn die periodische Vergleichsspannung $U_V$ die Referenzspannung $U_{Ref}$ vor dem Beginn der Impulsdauer $T_1$, aber nach dem Beginn der Impulsdauer von $T_2$ erreicht, sind beide bistabile Kippstufen bei Auftreten der Impulsdauer T1 im rückgesetzten Zustand, so daß sich keine Änderung für die Steilheit des periodischen Vergleichssignals $U_V$ ergibt.

Hat das periodische Vergleichssignal einen linearen zeitlichen Verlauf, ist prinzipiell nur eine gesteuerte Stromquelle $I_n$ zur Beeinflussung der Steilheit notwendig.

Wird das periodische Vergleichssignal $U_V$ durch einen Polygonzug mit mehreren Segmentabschnitten an die Leitungsfunktion $P(\alpha)$ für ohmsche Verbraucher bei der Phasenanschnittsteuerung gemäß Figur 2 angenähert, sind beispielsweise für die fünf Segmentabschnitte I, II, III, IV, V drei unterschiedliche gesteuerte Stromquellen $I_n$ notwendig, um eine Approximation an die Leitungsfunktion $P(\alpha)$ vorzunehmen, da diese Funktion punktsymmetrisch zu einem transformierten Koordinatensystem (x', y') ist, welches seinen Ursprung bei einem Phasenanschnittwinkel $\alpha = 90°$ und einer Leistungsübertragung von 50 % hat, und dadurch mit drei unterschiedlichen Steigungen für die fünf Segmentabschnitte beschrieben werden kann.

Die Funktion der Leistungskennlinie $P(\alpha)$ kann durch eine mathematische Funktion der Art

$$y = \tfrac{1}{2} \sin 2\alpha + (\pi - \alpha)$$

beschrieben werden.

Dazu steuert ein nicht dargestellter Logikteil die verschiedenen Stromquellen $I_n$ in Abhängigkeit vom momentanen Spannungspegel der periodischen Vergleichsspannung $U_V$ an, während die Netzfrequenzunabhängigkeit und Parameterkompensation durch eine Überlagerungsgröße, die vom Digital-Analog Wandler (D/A) erfindungsgemäß beeinflußt wird, geregelt ist.

**Patentansprüche**

1. Schaltungsanordnung zur netzfrequenzunabhängigen Leistungsstellung und zur Kompensation von Parameterstreuungen bei der Phasenanschnittsteuerung mit einer Zündimpulsformereinheit (1), in der durch Vergleichsbildung einer Steuer- oder Regelspannung ($U_{St}$) mit einer periodischen Vergleichsspannung ($U_V$) ein Zündimpuls ($U_Z$) für einen Phasenanschnittwinkel ($\alpha$) erzeugt wird, dadurch gekennzeichnet, daß die periodische Vergleichsspannung ($U_V$) über von einer Logikeinheit (L) gesteuerten Stromquellen ($I_n$) im eingeregelten Zustand in ihrem zeitlichen Verlauf so beeinflußt wird, daß bei jedem Nulldurchgang der Netzspannung ein festes, vorgegebenes Referenzspannungspotential ($U_{Ref}$) erreicht, wobei die gesteuerten Stromquellen ($I_n$) über einen Digital-Analog-Wandler (D/A) von einem Vorwärts-Rückwärts-Zähler (VR-Z) als Bestandteil der Logikeinheit (L) angesteuert werden, der aus dem Nulldurchgang der Netzfrequenz ($f_0$) abgeleitete Signale ($U_1$, $U_2$) unterschiedlicher Impulsdauer ($T_1$, $T_2$) zugeführt sind, durch die der Zählmodus des Vorwärts-Rückwarts-Zählers (VR-Z) in Abhängigkeit von der jeweiligen Lage des Schnittpunktes der periodischen Vergleichsspannung (Uv) mit einer Referenzspannung (URef) gesteuert wird.

2. Schaltungsanordnung nach Anspruch 1, dadurch gekennzeichnet, daß das vorgegebene feste Referenzspannungspotential (URef) Nullspannungspotential ist.

3. Schaltungsanordnung nach Anspruch 1 oder 2, dadurch gekennzeichnet, daß die periodische Vergleichsspannung (Uv) und die Referenzspannung (URef) über eine Komparatorstufe (K) verglichen werden, deren Ausgangssignal (UK) und ein aus dem Zündimpuls (Uz) abgeleitetes Signal (Uz1) der Logikeinheit (L) zum Steuern der Schaltungsmittel (AND, FF1, FF2) zugeführt sind.

4. Schaltungsanordnung nach einem der vorangehenden Ansprüche, dadurch gekennzeichnet, daß der Rückwärtseingang (RE) des Vorwärts-Rückwärts-Zählers (VR-Z) vom Ausgang eines ersten AND-Gatters (AND1) und sein Vorwärtseingang (VE) vom Ausgang eines zweiten AND-Gatters (AND2) angesteuert wird.

5. Schaltungsanordnung nach einem der vorangehenden Ansprüche, dadurch gekennzeichnet, daß je ein Eingang der AND-Gatter (AND1, AND2) von je einem Ausgang (Q1, Q2) zweier bistabiler Kippstufen (FF1, FF2) angesteuert wird, und die beiden anderen Eingänge der beiden AND-Gatter (AND1, AND2) vom ersten aus dem Nulldurchgang der Netzfrequenz (f0) abgeleiteten Signal (U1) angesteuert werden.

6. Schaltungsanordnung nach einem der vorangehenden Ansprüche, dadurch gekennzeichnet, daß der Reset-Eingang (R1) der ersten bistabilen Kippstufe (FF1) und der Set-Eingang (S2) der zweiten bistabilen Kippstufe (FF2) von dem vom Zündimpuls (Uz) abgeleiteten Signal (Uz1) angesteuert werden.

7. Schaltungsanordnung nach einem der vorangehenden Ansprüche, dadurch gekennzeichnet, daß der Set-Eingang (S1) der ersten bistabilen Kippstufe (FF1) vom Ausgang eines dritten AND-Gatters (AND3) angesteuert wird, dessen negierender Eingang vom zweiten, aus dem Nulldurchgang der Netzfrequenz (f0) abgeleiteten Signal (U2) angesteuert wird, und daß das Ausgangssignal der Komparatorstufe (K) den anderen Eingang des AND-Gatters (AND3) und den Reset-Eingang (R2) der zweiten bistabilen Kippstufe (FF2) ansteuert.

8. Schaltungsanordnung nach einem der vorangehenden Ansprüche, dadurch gekennzeichnet, daß die periodische Vergleichsspannung (Uv) als Lade- bzw. Entladespannung einer Kapazität (C), die mittels der gesteuerten Stromquellen (In) entladen und eines netzfrequenten Synchronisiersignals (USyn) geladen wird, entsteht.

9. Schaltungsanordnung nach einem der vorangehenden Ansprüche, dadurch gekennzeichnet, daß die periodische Vergleichsspannung (Uv) zeitlich linear verläuft oder durch einen Polygonzug an die Leistungskennlinie (P[α]) für die Phasenanschnittsteuerung angenähert ist.

**Claims**

1. A circuit arrangement for the adjustment of power independently of the mains frequency and for compensating for parameter deviations during the phase control, having a firing-pulse shaper unit (1) in which a firing pulse (Uz) is produced for a phase-shift angle (α) by comparing a control or regulating voltage (USt) with a periodic comparative voltage (Uv), characterised in that the periodic comparative voltage (Uv) is influenced in its course in time, in the adjusted state, via current sources (In) controlled by a logic unit (L), so that, on each zero-axis crossing of the mains voltage, a fixed preset reference voltage potential (URef) is reached, while the controlled current source (In) are activated, via a digital-analogue converter (D/A), by a bidirectional counter (VR-Z) as part of the logic unit (L), to which signals (U1, U2) are fed which are derived from the zero-axis crossing of the mains frequency (f0) and have different pulse durations (T1, T2) and by means of which the counting mode of the bidirectional counter (VR-Z) is controlled depending on the particular position of the point of intersection between the periodic comparative voltage (Uv) and a reference voltage (URef).

2. A circuit arrangement according to Claim 1, characterised in that the preset fixed reference voltage potential (URef) is zero voltage potential.

3. A circuit arrangement according to Claim 1 or 2, characterised in that the periodic comparative voltage (Uv) and the reference voltage (URef) are compared via a comparator stage (K) of which the output signal (UK) and a signal (Uz1) derived from the firing pulse (Uz) are supplied to the logic unit (L) to control the circuit means (AND, FF1, FF2).

4. A circuit arrangement according to any one of the preceding Claims, characterised in that the down input (RE) of the bidirectional counter (VR-Z) is activated from the output of a first AND gate (AND1) and its up input (VE) is activated from the output of a second AND gate (AND2).

5. A circuit arrangement according to any one of the preceding Claims, characterised in that one input of each of the AND gates (AND1, AND2) is activated by an output (Q1, Q2) of one two bistable trigger stages (FF1, FF2) and the other two inputs of the two AND gates (AND1, AND2) are activated by the first signal (U1) derived from the zero-axis crossing of the mains frequency (f0).

6. A circuit arrangement according to any one of the preceding Claims, characterised in that the reset input (R1) of the first bistable trigger stage (FF1) and the set input (S2) of the second bistable trigger stage (FF2) are activated by the signal (Uz1) derived from the firing pulse (Uz).

7. A circuit arrangement according to any one of the preceding Claims, characterised in that the set input (S1) of the first bistable trigger stage (FF1) is activated by the output of a third AND gate (AND3), the negating input of which is activated by the second signal (U2) derived from the zero-axis crossing of the mains frequency (f0), and that the

output signal of the comparator stage (K) activates the other input of the AND gate (AND₃) and the reset input (R₂) of the second bistable trigger stage (FF₂).

8. A circuit arrangement according to any one of the preceding Claims, characterised in that the periodic comparative voltage ($U_V$) is produced in the form of a charging or discharge voltage of a capacitor (C) which is discharged by means of the controlled current sources ($I_n$) and is charged by means of a mains-frequency synchronizing signal ($U_{Syn}$).

9. A circuit arrangement according to any one of the preceding Claims, characterised in that the periodic comparative voltage ($U_V$) has a linear course in time or is approximated by a polygonal curve on the power characteristic curve (P[α]) for the phase control.

## Revendications

1. Montage pour régler la puissance indépendamment de la fréquence du secteur et pour compenser des dispersions de paramètres dans la commande par coupure du début de l'alternance, comprenant une unité (1) de mise en forme d'impulsion de déclenchement, dans laquelle une impulsion de déclenchement ($U_Z$) pour un angle (α) de coupure du début d'alternance est généré par la comparaison d'une tension de commande ou de réglage ($U_{St}$) avec une tension de comparaison ($U_V$) périodique, caractérisé en ce que la tension de comparaison ($U_V$) périodique est influencée, dans son allure en fonction du temps, à l'état de réglage stable, par des sources de courant ($I_n$) commandées par une unité logique (L), de manière qu'elle atteigne, à chaque passage par zéro de la tension du secteur, un potentiel de tension de référence ($U_{Ref}$) fixe, prédéterminé, les sources de courant ($I_n$) commandées étant attaquées à travers un convertisseur numérique-analogique (D/A), par un compteur-décompteur (VR-Z), faisant partie de l'unité logique (L) et auquel sont appliqués des signaux ($U_1$, $U_2$) de durées d'impulsion ($T_1$, $T_2$) différentes, qui sont tirés du passage par zéro de la fréquence ($f_0$) du secteur et par lesquels le mode decomptage du compteur-décompteur (VR-Z) est commandé en fonction de la position instantanée de l'intersection de la tension de comparaison ($U_V$) périodique avec une tension de référence ($U_{Ref}$).

2. Montage selon la revendication 1, caractérisé en ce que le potentiel de tension de référence ($U_{Ref}$) fixe, prédéterminé, est le potentiel de tension nulle.

3. Montage selon la revendication 1 ou 2, caractérisé en ce que la tension de comparaison ($U_V$) périodique et la tension de référence ($U_{Ref}$) sont comparées par un étage comparateur (K) dont le signal de sortie ($O_K$) et un signal ($U_{Z1}$) tiré de l'impulsion de déclenchement ($U_Z$) sont envoyés à l'unité logique (L) pour commander les moyens de commutation (AND, FF₁, FF₂).

4. Montage selon une des revendications précédentes, caractérisé en ce que l'entrée de comptage régressif (RE) du compteur-décompteur (VR-Z) est attaquée par la sortie d'une première porte ET (AND₁) et son entrée de comptage progressif (VE) est attaquée par la sortie d'une seconde porte ET (AND₂).

5. Montage selon une des revendications précédentes, caractérisé en ce que l'une des entrées de chacune des portes ET (AND₁, AND2) est attaquée par une sortie ($Q_1$, $Q_2$) de deux basculeurs bistables (FF₁, FF₂) et que les deux autres entrées des deux portes ET (AND₁, AND₂) sont attaqués par le premier signal ($U_1$) tiré du passage par zéro de la fréquence du secteur ($f_0$).

6. Montage selon une des revendications précédentes caractérisé en ce que l'entrée de remise à 0 ($R_1$) du premier basculeur bistable (FF₁) et l'entrée de mise à 1 ($S_2$) du second basculeur bistable (FF₂) sont allaquées par le signal ($U_{Z1}$) tiré de l'impulsion de déclenchement ($U_2$).

7. Montage selon un des revendications précédentes, caractérisé en ce que l'entrée de mise à 1 ($S_1$) du premier basculeur bistable (FF₁) est attaquée par la sortie d'une troisième porte ET (AND₃) dont l'entrée inverseuse est attaquée par le second signal ($U_2$) tiré du passage par zéro de la fréquence du secteur ($f_0$) et que le signal de sortie de l'étage comparateur (K) attaque l'autre entrée de cette porte ET (AND₃) et l'entrée de remise à 0 ($R_2$) du second basculeur bistable (FF₂).

8. Montage selon une des revendications précédentes, caractérisé en ce que la tension de comparaison ($U_V$) périodique est produite sous forme d'une tension de charge ou de décharge d'une capacité (C) qui est déchargée au moyen des sources de courant ($I_n$) commandées et est chargée par un signal de synchronisation ($U_{Syn}$) ayant la fréquence du secteur.

9. Montage selon une des revendications précédentes, caractérisé en ce que la tension de comparaison ($U_V$) périodique possède une allure linéaire dans le temps ou est approchée par un tracé polygonal à la caractéristique de puissance (P[α]) pour la commande par coupure du début de l'alternance.

FIG.1

FIG.2a

FIG.2b

FIG.2c

FIG.2d

FIG.3